(19) Europäisches Patentamt / European Patent Office / Office européen des brevets

(11) **EP 2 461 186 A2**

(12) **EUROPEAN PATENT APPLICATION**

(43) Date of publication:
**06.06.2012 Bulletin 2012/23**

(51) Int Cl.:
***G01T 3/06*** *(2006.01)*

(21) Application number: **11187969.8**

(22) Date of filing: **04.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **08.11.2010 US 941675**

(71) Applicant: **General Electric Company Schenectady, NY 12345 (US)**

(72) Inventors:
• **Clothier, Brent Allen**
  **Niskayuna, NY 12309 (US)**
• **Ivan, Adrian**
  **Niskayuna, NY 12309 (US)**
• **Srivastava, Alok Mani**
  **Niskayuna, NY 12309 (US)**

(74) Representative: **Williams, Andrew Richard et al**
  **Global Patent Operation-Europe**
  **GE International Inc**
  **15 John Adam Street**
  **London WC2N 6LU (GB)**

(54) **Neutron Scintillator Composite Material And Method Of Making Same**

(57)    A neutron scintillator composite (NSC) material is made of a neutron scintillator material and a binder material. The binder material has an index of refraction substantially identical to the neutron scintillator material. The neutron scintillator material and binder material are mixed into a solid or semi-solid neutron scintillator composite material with sufficient flowability for molding into a shaped article, such as a neutron sensing element of a radiation detector (10, 20, 30, 40). The neutron scitillator composite material collects and channels photons through the material itself and into a photosensing element optically coupled to the material. Because the indices of refraction for both the neutron scintillator material and the binder material are substantially identical, scattering at the scintillator-binder interface(s) is minimized, thereby producing transmission efficiencies that approach single crystals.

FIG. 2

EP 2 461 186 A2

## Description

BACKGROUND

Scintillator materials (hereinafter scintillators) are widely used in detectors for high-energy radiation, e.g. gamma rays, X-rays, cosmic rays, neutrons, and other particles characterized by an energy level of greater than or equal to about 1 keV. The scintillator is coupled with a light-detection means, such as, for example, a photosensor. When radiation impacts the scintillator, the scintillator emits light. The photosensor produces an electrical signal proportional to the number of light pulses received, and to their intensity. Scintillators are in common use for many applications. Examples include medical imaging equipment, e.g., positron emission tomography (PET) devices; well logging for the oil and gas industry; portal and handheld detectors for homeland security; and various digital imaging applications.

In the detection of neutrons by solid-state scintillation, perhaps the most highly-utilized material stems from a granular mixture of 6-LiF and ZnS:Ag. Each component in this mixture represents "best-of-class" performance (i.e., respectively, neutron capture and luminescence). For neutron capture, the LiF crystal structure offers one of the highest Li site densities in the solid-state and therefore maximizes the probability of neutron interaction when enriched in 6-Li. For luminescence, ZnS:Ag is one of the brightest phosphors known and remains unparalleled in its emission under alpha and triton exposure (i.e., the by-products of 6-Li neutron capture). Thus, the combination of 6-LiF and ZnS:Ag, held together by an optically-transparent binding material, forms a neutron scintillator composite (NSC) with exceptional efficiency.

Unfortunately, neutron scintillator composites, when comprised of such granular mixtures (e.g., 6-LiF/ZnS:Ag, $10\text{-}B_2O_3$/ZnS:Ag, etc.), suffer from optical losses due to the scattering of light at internal interfaces and the absorption of light during transmission. The latter is aided by ZnS:Ag which can self-absorb its own luminescence. These loss mechanisms create a thickness limitation: increasing the NSC thickness beyond a certain threshold value (e.g., about 1.0 mm for 6-LiF/ZnS:Ag mixtures) provides no further light output despite the additional capability for neutron absorption. Thus, large continuous volumes are not accessible, and equally important, many useful shapes cannot be implemented without significant workarounds.

BRIEF DESCRIPTION

The invention solves the problem of optical transparency by: [1] combining the neutron capture and luminescence functionality into a single scintillator composition and [2] index-matching the binder material with the neutron scintillator material. These characteristics significantly reduce internal absorption and scattering, thereby increasing the light output of the NSC body. As a result, the number and intensity of optical pulses reaching the photosensor increases, which in turn, dramatically improves neutron detection efficiency.

The amount of internal absorption and scattering is dependent on the type and surface area of optical interfaces in an NSC. For conventional NSCs incorporating granular mixtures (e.g., 6-LiF/ZnS:Ag), the number of possible optical interfaces is five (e.g., 6-LiF/binder, ZnS:Ag/binder, 6-LiF/ZnS:Ag, 6-LiF/6-LiF, and ZnS:Ag/ZnS:Ag). In contrast, the number of possible interfaces for the invention is two: scintillator-binder and scintillator-scintillator. The latter, which represents contact between the same material, is already index-matched so the number of interfaces is effectively one. Incorporating a single composition therefore reduces optical complexity and enhances transparency.

Furthermore, neutron scintillator materials of the invention exhibit indices of refraction ($n \sim 1.3 - 1.6$) that overlap with known epoxies, thermoplastics, low-melting inorganic glasses, and the like ($n \sim 1.4 - 1.6$). The compositions therefore enable index matching, which is exploited by the invention to eliminate optical losses at the scintillator-binder interface. This transparency improvement allows large continuous volumes of useful shapes, by-passing the need to pursue more expensive single-crystal embodiments. In contrast, conventional NSCs often contain ZnS:Ag whose high index of refraction ($n \sim 2.2$) prevents index-matching with known binders. Bodies of conventional NSCs are therefore opaque and limited to thicknesses less than 1 mm.

In one aspect, a neutron scintillator composite material comprises a neutron scintillator material including 6-Li having a non-zero concentration, and a binder material having an index of refraction that is substantially identical to an index of refraction of the neutron scintillator material.

In another aspect, a neutron scintillator composite material comprises a neutron scintillator material including 6-Li having a non-zero concentration, and a binder material having an index of refraction that substantially identical to an index of refraction of the neutron scintillator material, wherein the neutron scintillator material comprises one the following compositions:

[1] $(Li_{1-x}A_x)_2LnX_5$, where $0 < x \leq 1$, or

[2] $(Li_{1-x}A_x)_2(Li_{1-y}A'_y)LnX_6$, where $0 < x \leq 1$ and $0 < y \leq 1$ but x and y cannot simultaneously be one, or

[3] $BLn(Li_{1-x}A_x)X_5$, where $0 < x \leq 1$, or

[4] $(Li_{1-x}A_x)_2Ln_{1-a-b}Ce_aPr_bX_5$, where $0 < x \leq 1; 0 \leq a \leq 1$ and $0 \leq b \leq 1$ but a and b cannot simultaneously be zero or one, or

[5] $(Li_{1-x}A_x)_2(Li_{1-y}A'_y)Ln_{1-a-b}Ce_aPr_bX_6$, where $0 < x \leq 1$ and $0 < y \leq 1$ but x and y cannot simultaneously be one; $0 \leq a \leq 1$ and $0 \leq b \leq 1$ but a and b cannot simultaneously be zero or one, or

*[6] $BLn_{1-a-b}Ce_aPr_b(Li_{1-x}A_x)X_5$,* where $0 < x \leq 1$; $0 \leq a \leq 1$ and $0 \leq b \leq 1$ but *a* and *b* cannot simultaneously be zero or one,

and where,

A, A' = ions of T1, Na, K, Rb, Cs, or any combination thereof,

*B* = ions of Cs, Rb, Tl, or any combination thereof,

*Ln* = ions of Y, the lanthanide series, bismuth, or any combination thereof, and

X = a halogen ion, or any combination comprising halogen ions, and

a binder material having an index of refraction that is substantially identical to an index of refraction of the neutron scintillator material.

In yet another aspect, a method for fabricating a neutron scintillator composite material comprising mixing a neutron scintillator material including 6-Li having a non-zero concentration with a binder material having an index of refraction that is substantially identical to an index of refraction of the neutron scintillator material, wherein the binder material provides the neutron scintillator material with sufficient flowability to be formed into a shaped article.

DRAWINGS

These and other features, aspects, and advantages of the present invention will become better understood when the following detailed description is read with reference to the accompanying drawings in which like characters represent like parts throughout the drawings, wherein:

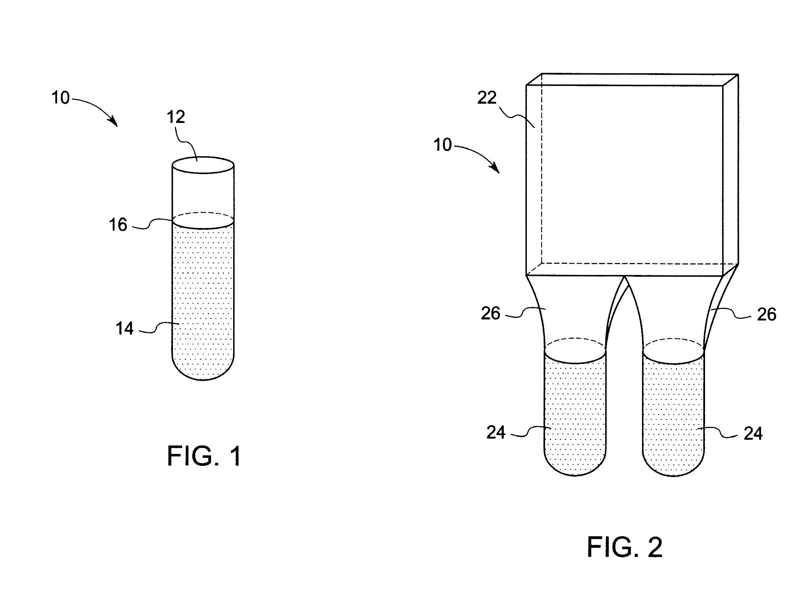

FIG. 1 shows an embodiment of a radiation detector of the invention in which the 6-Li based neutron scintillator composite (NSC) material of the invention is shaped into a transparent body 12 to serve as a neutron sensing element that matches in cross-sectional size to the light sensitive area of a photosensor;

FIG. 2 shows an embodiment of a radiation detector of the invention in which the 6-Li based neutron scintillator composite (NSC) material of the invention is formed in a large transparent body to serve as a neutron sensing element that is larger than the light sensitive area of the photosensor;

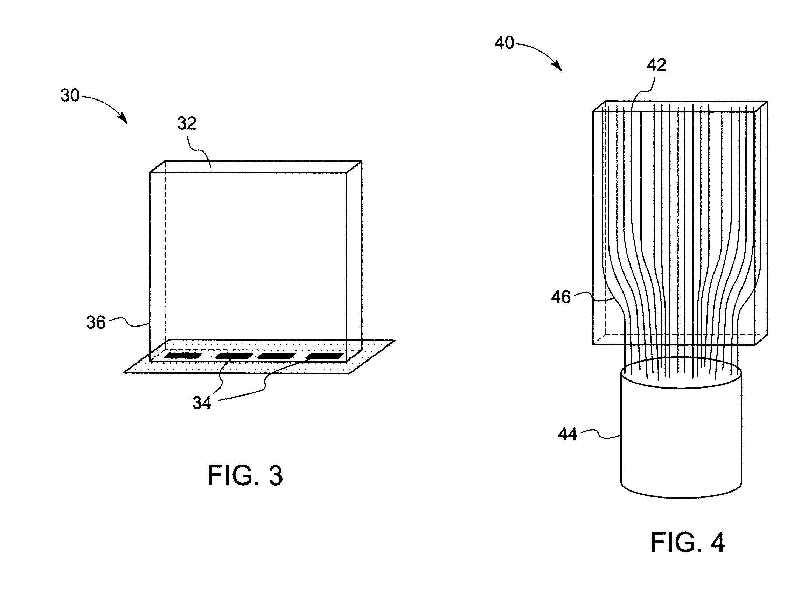

FIG. 3 shows an embodiment of a radiation detector of the invention in which the size mismatch between the light exit area of the transparent body of NSC material and the entrance area for a single photosensor device is compensated by an array of a plurality of photosensors directly coupled optically by a thin layer of optical medium; and

FIG. 4 shows an embodiment of a radiation detector of the invention in which the optical coupling medium is distributed throughout a body of the 6-Li based neutron scintillator composite (NSC) material of the invention with the purpose to collect the scintillation light and channel the photons to the light sensitive area of a photosensor.

DETAILED DESCRIPTION

The details of the transparent neutron scintillator composite (NSC) material of the invention comprising a neutron scintillator composition and a binder composition will now be described.

I. Neutron Scintillator Material

In general, the ability of the neutron scintillator material of the invention to detect neutron radiation stems from the presence of 6-Li, which exhibits a large cross section for thermal neutron capture. The capture process results in the disintegration of 6-Li, producing charged alpha and triton products as detailed in the 6-Li(n,α) reaction below:

$$^6\mathrm{Li} + {}^1\mathrm{n} \dashrightarrow {}^4\alpha + {}^3\mathrm{H} \quad (Q = 4.78 \text{ MeV})$$

The 4.78 MeV kinetic energy of the charged alpha and triton particles (i.e., $Q$) is high and enables a significant "per event" energy transfer into the 6-Li host. Thus, by incorporating 6-Li, materials are created that offer exceptional capability for neutron absorption. This invention integrates 6-Li into the neutron scintillator material whose crystalline lattices are highly-efficient at transferring energy to scintillation activators. These activators, after excitation, decay back into their ground states, producing photons characteristic of scintillation phenomena.

The 6-Li enrichment of the neutron scintillator material can vary from 0% < 6-Li ≤ 100% (i.e., the 6-Li enrichment should be non-zero). 6-Li natural abundance is 7.59% and the highest commercial source is currently 95%. In the compositional descriptions that follow, references to "Li" presume a non-zero 6-Li enrichment.

In one embodiment, the neutron scintillator material comprises a compound having the formula (I)

$$(\mathrm{Li}_{1-x}A_x)_2 LnX_5 \qquad\qquad\qquad \text{(I)}$$

where Li comprises nuclides of one of 6-Li and 7-Li with a non-zero concentration of 6-Li, A comprises ions of thallium, Group IA elements, or any combination thereof, Ln comprises ions of rare earth elements, bismuth, or any combination thereof, X comprises ions of halogen elements or any combination thereof, and x can have values from 0 up to, but not including, 1. Suitable examples of A are ions of potassium, rubidium, cesium, thallium, or the like, or any combination thereof.

Suitable examples of $Ln$ are ions of yttrium, scandium, lanthanum, cerium, praseodymium, neodymium, samarium, europium, gadolinium, terbium, dysprosium, holmium, erbium, thulium, ytterbium, lutetium, or the like, or any combination thereof. Exemplary rare earth elements that can be used in the neutron scintillator material of the formula (I) are yttrium, lutetium, lanthanum, or any combination thereof. Examples of halogens are fluorine, chlorine, iodine, bromine, or any combination thereof.

In another embodiment, the neutron scintillator material comprises an elpasolite compound having the formula (II)

$$(\mathrm{Li}_{1-x}A_x)_2(\mathrm{Li}_{1-y}A'_y)LnX_6 \qquad\qquad \text{(II)}$$

where Li comprises nuclides of one of 6-Li and 7-Li with a non-zero concentration of 6-Li, A and A' are the same as indicated by A in the formula (I) above, Ln is the same as indicated in the formula (I) above, $X$ is the same as indicated in the formula (I) above, x can have values the same as indicated in the formula (I) above, and y can have values from 0 up to, but not including, 1. Suitable examples of A in formula (II) are ions comprising potassium, rubidium, cesium, thallium, or the like, or any combination thereof. Suitable examples of A' are ions of sodium.

In yet another embodiment, the neutron scintillator material comprises a compound having the formula (III)

$$BLn(\mathrm{Li}_{1-x}A_x)X_5 \qquad\qquad\qquad \text{(III)}$$

where Li comprises nuclides of one of 6-Li and 7-Li with a non-zero concentration of 6-Li, $B$ comprises ions of cesium, rubidium, thallium, or any combination thereof, Ln is same as indicated in the formula (I), A is the same as indicated in the formula (I) above, X is a halogen as indicated above in the formula (I), and x can have values the same as indicated in the formula (I) above. Suitable examples of $Ln$ in formula (III) are ions of yttrium, lanthanum, cerium, gadolinium, praseodymium, lutetium, bismuth, or any combination thereof. Suitable examples of A in formula (III) are ions of sodium, potassium, or any combination thereof.

In an aspect of the invention, the neutron scintillator material of the invention incorporates cerium and/or praseodymium as scintillation activators. The incorporation of a cerium ion into the neutron scintillator materials mentioned in formulas (I), (II) or (III) above increases the light yield of the neutron scintillator material as compared to a neutron scintillator material that does not incorporate the cerium ion. Further, the incorporation of a praseodymium ion and a cerium ion into the neutron scintillator materials mentioned in formulas (I), (II) or (III) above further increases the light yield of the neutron scintillator material as compared to a neutron scintillator material that only incorporates the cerium ion. Without being limited to theory, the praseodymium ion acts as an efficient hole trap that transfers its recombination energy to the cerium ion thereby increasing the light yield. The incorporation of cerium and/or praseodymium as scintillation activators is described in U.S. Pat. App. Pub. No. 2008/0131347 A1 (Srivastava, et al.), the entire contents of which are incorporated herein by reference.

The above-mentioned neutron scintillator materials of formulas (I), (II) or (III) incorporating cerium and/or praseodymium halides are self-activating. In other words, the neutron scintillator compositions of the invention do not use a separate activator compound because cerium and praseodymium function as both the activator (i.e., the emission source of the neutron radiation measured by a scintillation detector) and a host element.

In one embodiment, the cerium ions and the praseodymium ions are incorporated into the neutron scintillator materials of formulas (I), (II) or (III) by the use of cerium halides and praseodymium halides, respectively. Examples of cerium halides are cerium fluoride, cerium chloride, cerium bromide, cerium iodide, or any combination thereof, while examples of praseodymium halides are praseodymium fluoride, praseodymium chloride, praseodymium bromide, praseodymium iodide, or any combination thereof.

When both the cerium halides and the praseodymium halides are added to the neutron scintillator material of formulas (I), (II) or (III), they may be added either simultaneously or sequentially to form a solid solution. In an exemplary embodiment, the cerium halides and the praseodymium halides are added simultaneously to the neutron scintillator material of formula (I), (II) or (III) to form a solid solution. Methods for preparing such solid-state solutions are described in U.S. Pat. App. Pub. No. 2008/0131347 A1 (Srivastava, et al.), the entire contents of which are incorporated herein by reference.

In another embodiment, the neutron scintillator material of formula (I) may be simultaneously reacted with a cerium halide and/or a praseodymium halide to form a neutron scintillator material of the formula (IV) below:

$$(Li_{1-x}A_x)_2 Ln_{1-a-b} Ce_a Pr_b X_5 \qquad\qquad (IV)$$

where Li comprises nuclides of one of 6-Li and 7-Li with a non-zero concentration of 6-Li, A, $Ln$, X and x are the same as indicated above in formula (I), Ce represents cerium, Pr represents praseodymium and a can have values of 0 to 1, while b can have values of 0 to 1. It is to be noted that a and b cannot simultaneously be both 0 or 1 in the neutron scintillator composition (IV). For the neutron scintillator composition of formula (IV), a and b will both be equal to 0 simultaneously. In one embodiment, when only praseodymium is present, a is equal to 0 when b is equal to 1. In another embodiment, when only cerium is present, b is equal to 0 when $a$ is equal to 1. When cerium and praseodymium are both present in the formula (IV), a and b can have values of about 0.01 to 0.99.

In yet another embodiment, the neutron scintillator material of formula (II) may be simultaneously reacted with a cerium halide and/or a praseodymium halide to form a neutron scintillator material of the formula (V) below:

$$(Li_{1-x}A_x)_2 (Li_{1-y}A'_y) Ln_{1-a-b} Ce_a Pr_b X_6 \qquad\qquad (V)$$

where Li comprises nuclides of one of 6-Li and 7-Li with a non-zero concentration of 6-Li, A, A', $Ln, X, x$ and y are the same as indicated above in formula (II), Ce represents cerium, Pr represents praseodymium and a can have values of 0 to 1, while b can have values of 0 to 1. It is to be noted that a and b cannot simultaneously be both 0 or 1 in the neutron scintillator material (V). For the neutron scintillator material of formula (V), a and b can both be equal to 0 simultaneously. In one embodiment, when only praseodymium is present, a is equal to 0 when b is equal to 1. In another embodiment, when only cerium is present, b is equal to 0 when a is equal to 1. When cerium and praseodymium are both present in the formula (V), a and b can have values of about 0.01 to 0.99.

In still yet another embodiment, the neutron scintillator material of formula (III) may be simultaneously reacted with a cerium halide and/or a praseodymium halide to form a neutron scintillator material of the formula (VI) below:

$$BLn_{1-a-b}Ce_aPr_b(Li_{1-x}A_x)X_5 \qquad\qquad (VI)$$

where Li comprises nuclides of one of 6-Li and 7-Li with a non-zero concentration of 6-Li, $B, Ln, A,$ X and x are the same as indicated above in formula (III), Ce represents cerium, Pr represents praseodymium and a can have values of 0 to 1, while b can have values of 0 to 1. It is to be noted that a and b cannot simultaneously be both 0 or 1 in the neutron scintillator composition (VI). For the neutron scintillator composition of formula (IV), a and b can both be equal to 0 simultaneously. In one embodiment, when only praseodymium is present, $a$ is equal to 0 when b is equal to 1. In another embodiment, when only cerium is present, b is equal to 0 when a is equal to 1. When cerium and praseodymium are both present in the formula (VI), a and b can have values of about 0.01 to 0.99.

As can be seen in the formulas (IV), (V) and (VI), the introduction of cerium halides and/or praseodymium halides into the neutron scintillator materials of formulas (I), (II) or (III) promotes a replacement of the lanthanide halide with the cerium halides and/or praseodymium halide.

It should also be understood that the above-mentioned neutron scintillator materials of formulas (IV), (V) or (VI) may contain small amounts of impurities. These impurities usually originate with the starting materials, and generally constitute less than about 0.1 % by weight of the neutron scintillator material, and generally constitute less than about 0.01 % by weight of the neutron scintillator material.

The neutron scintillator materials of formulas (IV), (V) or (VI) may also include parasitic phases, whose volume percentage is usually less than about 1 %. Moreover, minor amounts of other materials may be purposefully included in the scintillator compositions, as described in U.S. Patent 6,585,913 (Lyons et al.), the entire contents of which is incorporated herein by reference. For example, minor amounts of other rare earth halides can be added to reduce afterglow. Calcium and/or dysprosium can be added to reduce the likelihood of radiation damage.

The neutron scintillator materials of formulas (IV), (V) or (VI) provide numerous advantages over other commercially-available neutron scintillator materials. For example, the neutron scintillator materials can simultaneously exhibit a short decay time, a reduced afterglow, a high neutron absorption rate, and a high light output per neutron event. Furthermore, the neutron scintillator materials can be manufactured economically, and when in powder form, be combined with binder materials to form large transparent and continuous volumes of useful shapes.

In summary, the neutron scintillator material of the invention is one from the following compositions:

[1] $(Li_{1-x}A_x)_2LnX_5$

[2] $(Li_{1-x}A_x)_2(Li_{1-y}A'y)LnX_6$

[3] $BLn(Li_{1-x}A_x)X_5$

[4] $(Li_{1-x}A_x)_2Ln_{1-a-b}Ce_aPr_bX_5$

[5] $(Li_{1-x}A_x)_2(Li_{1-y}A'_y)Ln_{1-a-b}Ce_aPr_bX_6$

[6] $BLn_{1-a-b}Ce_aPr_b(Li_{1-x}A_x)X_5$

where,

A = ions of Tl, Na, K, Rb, Cs, or any combination thereof,
A' = ions of Tl, Na, K, Rb, Cs, or any combination thereof,
B = ions of Cs, Rb, Tl, or any combination thereof,
$Ln$ = ions of Y, the lanthanide series, bismuth or any combination thereof, and
X = a halogen ion or any combination comprising halogen ions.

In composition [1], $0 < x \leq 1$.
In composition [2], $0 < x \leq 1$ and $0 < y \leq 1$ but x and y cannot simultaneously be one.
In composition [3], $0 < x \leq 1$.
In composition [4], $0 < x \leq 1$; $0 \leq a \leq 1$ and $0 \leq b \leq 1$ but a and b cannot simultaneously be zero or one.
In composition [5], $0 < x \leq 1$ and $0 < y \leq 1$ but x and y cannot simultaneously be one; $0 \leq a \leq 1$ and $0 \leq b \leq 1$ but a and b cannot simultaneously be zero or one.
In composition [6], $0 < x \leq 1$; $0 \leq a \leq 1$ and $0 \leq b \leq 1$ but a and b cannot simultaneously be zero or one.
In all the compositions [1]-[6], the 6-Li enrichment can vary from $0\% < $ 6-Li $\leq 100\%$ (i.e., the 6-Li enrichment should be non-zero). 6-Li natural abundance is 7.59% and the highest commercial source is currently 95%.

II. Transparent Binder Material

One aspect of the invention is that the inventors have discovered that the indices of refraction for the neutron scintillator materials described above fall within a range overlapping that of known epoxies, thermoplastics, and low-melting inorganic glasses (i.e., 1.3 - 1.6 versus 1.4 - 1.6, respectively). This overlap can be exploited to select a binder material, such as an epoxy, a thermoplastic, a low-melting inorganic glass, and the like, which has a substantially identical index of refraction as the neutron scintillator materials described above. In other words, the binder material is transparent to the wavelength of the photons emitted by the neutron scintillator materials described above and allow the photon to pass efficiently through the neutron scintillator composite (NSC) material of the invention. As a result, the NSC material of the invention has a transmissive capability for emitted photons that approaches that of a single crystal. Thus, the NSC material of the invention has the capability to act as an optical waveguide to collect and channel photons within the NSC material itself, thereby greatly increasing the optical efficiency of any radiation detector that may house the NSC material of the invention.

In some embodiments, the binder material used in the NSC material of the invention comprises one or more of a thermoplastic resin or a thermoset resin. In some embodiments, the binder material comprises one or more selected from group consisting of acrylate-based resin, epoxy resin, siloxane resin, and combinations thereof. Where a thermoplastic resin is chosen, it may be selected from the group consisting of polyacetal, polyacrylic, polyamide, polyamideimide, polyanhydride, polyarylate, polyarylsulfone, polybenzimidazole, polybenzothiazinophenothiazine, polybenzothiazole, polybenzoxazole, polycarbonate, polycarborane, polydibenzofuran, polydioxoisoindoline, polyester, polyether etherketone, polyether ketone ketone, polyetherimide, polyetherketone, polyethersulfone, polyimide, polyoxabicyclononane, polyoxadiazole, polyoxindole, polyoxoisoindoline, polyphenylene sulfide, polyphosphazene, polyphthalide, polypiperazine, polypiperidine, polypyrazinoquinoxaline, polypyrazole, polypyridazine, polypyridine, polypyromellitimide, polypyrrolidine, polyquinoxaline, polysilazane, polystyrene, polysulfide, polysulfonamide, polysulfonate, polysulfone, polytetrafluoroethylene, polythioester, polytriazine, polytriazole, polyurea, polyvinyl alcohol, polyvinyl ester, polyvinyl ether, polyvinyl halide, polyvinyl ketone, polyvinyl nitrile, polyvinyl thioether, and combinations comprising one or more of the foregoing thermoplastic resin.

The binder material of the invention may also include one or more of any conventional additives, e.g., antioxidants, UV absorbers, stabilizers, metal deactivators, peroxide scavengers, fillers, reinforcing agents, plasticizers, lubricants, emulsifiers, pigments, optical brighteners, flameproofing agents, anti-static agents, blowing agents, among others. When required or desired, these additives are chosen such that the requisite gamma insensitivity, optical transparency, and moldability are maintained. The binder of the invention may also advantageously substantially not fluoresce under irradiation by gamma rays, and may also advantageously be insensitive to degradation under gamma irradiation.

It is preferred to ensure that the chosen binder material is an optically clear molding composition. Many of these are commercially available for use in optoelectronic applications, and the choice will depend upon the desired gamma ray insensitivity and optical clarity possessed by the material. Some such molding compositions include optically clear epoxy resins, a non-limiting example of which is EPOTEK 301-2, available from Epoxy Technology, Billerica MA.

In certain embodiments, the invention may involve the preparation of the transmissive moldable resin composition. In cases where the moldable resin composition is already of sufficient character to confer the desired flowability features to the final composition, it may be used substantially as received. Certain silicone (e.g., polydimethylsiloxane) resins may have sufficient plasticity. Room temperature vulcanization (RTV) silicone, RTV silicone rubber, and the like, may also be used. Alternatively, the resin can be a multipart reaction product that must be prepared prior to use. Certain epoxy resins may require this, as by, for example, combination of a hardener and a resin precursor.

III. NSC Composte Material

In general, the NSC composite material of the invention by mixing a minimum quantity of binder material with the neutron scintillator material in the form of powder or particles to create a flowable mass. Next, before curing (if an epoxy binder material is used) or solidifying (if a thermoplastic, glass, and the like is used) the flowable mass is molded, cast, extruded, and the like, into a shaped article useful for neutron detection. For example, the flowable mass can be formed into a monolith, a sheet, a filament, a cylindrical shell, a straw, and the like, resulting in the shaped article.

The NSC composite material of the invention is preferably characterized by an ability to enable simplified fabrication of shaped articles. As used herein, "shaped articles" includes, but is not limited to: layers, sheets, rods, blocks, wires, nets, lenticular fixtures, fibers, etc. (via processes including tape-casting and extrusion); complex bodies, etc. (via processes including machining or casting); and conformal coatings, etc. (via processes including spraying, dipping, or spinning). All of these aforementioned "shaped articles" constitute "articles" according to the present disclosure and claims.

As noted above, the neutron scintillator material is mixed with the binder material, such as a resin, to fabricate the NSC composite material. In certain embodiments, this requires the admixing of granular neutron scintillator material in the form of powder or particles with the resin. In such an embodiment, the granular material is added to the resin under effective conditions such as agitating, filtering, straining, pressing, crushing, deagglomerating, and the like. The conditions are effective to achieve or maintain an intimate mixture or dispersion, and to form a moldable, neutron sensitive composition as a solid or semi-solid with sufficient flowability for molding into a shaped article. Any remaining aggregates of granular starting material can be removed or disintegrated by sizing, straining, sieving or otherwise further deagglomerating the mixture. Such a step of deagglomeration can eliminate any entrapped bubbles as well as break up aggregates. It is desirable, although not required, to attain a smooth and/or creamy mixture. In some embodiments, a smooth and/or creamy intimate dispersion of the neutron scintillator material in the resin offers advantages, possibly including an advantageous reduction in streaking during casting into an article.

A shaping step is required for fabrication of the moldable NSC composite material into the shaped article. Persons skilled in the art know a wide variety of shaping steps for composite materials containing resins. Among the processes by which a moldable, NSC composite material may be shaped into an article includes one or steps such as tape-casting, slip-casting, extrusion, pultrusion, injection molding, compression molding, blow molding, rolling, thermoforming, vacuum forming, kneading, pressing, coating, spraying, printing, and combinations thereof, and the like. The particular method chosen is not especially critical, but depends upon the desired final shape. In certain embodiments, the constituents and/or consistency of the moldable neutron sensitive composition may have an impact upon the choice of parameters by which the shaping step is conducted. For example, if the solids content of the moldable neutron sensitive composition is too high, the composition may be too viscous for efficient use. On the other hand, if the solids content of the moldable neutron sensitive composition is too low, then sedimentation of the solids could occur.

In some embodiments, the moldable resin composition is capable of being shaped as formed, at substantially ambient conditions. In some embodiments, diluents, thinners, or plasticizers may be added to facilitate shaping. In still other embodiments, conditions of pressure and/or temperature above ambient may be employed to also facilitate or enable shaping.

IV. Neutron Radiation Detector

Shaped articles of the NSC composite material described herein can be used in a neutron-counting detector comprised of: [1] a 6-Li based neutron scintillator composite (NSC) of the invention, [2] an optical-coupling medium (e.g., optical grease, optical fibers, and the like), and [3] a photosensor (e.g., a photomultiplier tube, a semiconductor diode, array of diodes, and the like). Upon exposure to thermalized neutron radiation, the 6-Li isotope captures neutrons, disintegrating into energized alpha and triton particles. These particles stimulate photon emission in the neutron scintillator composite material. The photons are channeled via the optical-coupling medium into the sensor where they are counted.

A suite of illustrative, but non-limiting, schematic embodiments, showing a shaped, neutron sensitive article in a radiation detector, are shown in FIGS. 1-4.

FIG. 1 shows the simplest embodiment of a radiation detector 10 of the invention in which the 6-Li based neutron scintillator composite (NSC) material of the invention is shaped into a transparent body 12 to serve as a neutron sensing element that matches in cross-sectional size to the light sensitive area of a photosensor 14. As used herein, "transparent" is defmed as a material that has an index of refraction that allows photons at a desired wavelength to travel through the material with little or no attenuation. In this embodiment, only a thin layer of optical coupling medium 16 (optical grease, epoxy, RTV silicone, RTV silicone rubber, and the like) is used at the interface between transparent body 12 of NSC material and the photosensor 14 to optimize the transmission of the light photons from the transparent body 12 to the active area of the photosensor 14. It will be appreciated that the invention can be practiced with any suitable photosensor acting as the photosensing element, and that the use herein of the particular shape of the transparent body 12 of NSC material and the photosensor 14 is merely illustrative and non-limiting.

FIG. 2 depicts an embodiment of a radiation detector 20 of the invention in which the 6-Li based neutron scintillator composite (NSC) material of the invention is formed in a large transparent body 22 to serve as a neutron sensing element that is larger than the light sensitive area of the photosensor 24. In this embodiment, the optical coupling medium 26 consists of a shaped optical guide, for example, a plurality of optical guides with the purpose of collecting light from the NSC body 22 and transmitting the light to the photosensor(s) 24 with minimum light loss. It is evident to those skilled in the art that the invention embodiment depicted in FIG 2 can be realized with any suitable photosensor(s) 24 and light guide(s) 26 and that the use of the particular shape of the transparent body 22 of NSC material and the photosensor(s) 24 is illustrative and non-limiting.

Similarly, FIG. 3 illustrates an embodiment of a radiation detector 30 of the invention in which the size mismatch between the light exit area of the transparent body 32 of NSC material and the entrance area for a single photosensor device 34 is compensated by an array of a plurality of photosensors 34 directly coupled optically by a thin layer 36 of optical medium (optical grease, epoxy, RTV silicone, RTV silicone rubber, and the like). It will be appreciated that the invention can be practiced with any suitable photosensor 34, such as semiconductor diodes, silicon photomultiplier arrays, photomultiplier tubes, etc, and that the use herein of the particular shape of the NSC body 32 and the photosensor (s) 34 is merely illustrative and non-limiting and can be adapted by those skilled in the art to any shape of the NSC body and/or the photosensor active area.

FIG. 4 shows an embodiment of a radiation detector 40 of the invention in which the optical coupling medium is distributed throughout a body 42 of the 6-Li based neutron scintillator composite (NSC) material of the invention with the purpose to collect the scintillation light and channel the photons to the light sensitive area of a photosensor 44. It will be apparent to those skilled in the art, a bundle of optical fibers 46 can be used to collect and transmit the light as described. It is also appreciated that the type of optical fibers, their number, dimensions, composition, refractive index, and other optical properties, such as the ability to shift the wavelength of the scintillation light, can be suitably matched to the size of the body 42 of NSC material and the photosensor 44, the light emission distribution and refractive index of the NSC material of the invention, and the spectral sensitivity characteristics of the photosensor 44. For these reasons, the use herein of the particular shape of the body 42 of NSC material and the photosensor 44 in FIG. 4 is merely illustrative and non-limiting.

As described above, the neutron scintillator composite material of the invention is comprised of [1] a 6-Li containing neutron scintillator particulate material (i.e., powder, coarse particles, and the like), and [2] a binder having an index of refraction that substantially identical to the index of refraction of the neutron scintillator particulate material.

There are several advantages to the transparent NSC of the invention. First, the transparent NSC of the invention simultaneously combines scintillator functionality with that of an optical waveguide. The indices of refraction for both the scintillator particulate material and the binder are substantially identical, thereby minimizing scattering at the scintillator-binder interface(s). This feature produces transmission efficiencies that approach single crystal embodiments, but without the latter's higher cost.

Second, the binder enables the ready fabrication (i.e., via molding, casting, extruding, etc.) of shapes useful for neutron detection in large, commercially-relevant volumes. This advantage is absent in single crystal embodiments where slow growth rates reduce manufacturing throughput. Machining of the latter to produce desired shapes (e.g., cutting, polishing, etc.) also adds notably to their manufacturing cycle times and cost.

This written description uses examples to disclose the invention, including the best mode, and also to enable any person skilled in the art to make and use the invention. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A neutron scintillator composite material, comprising:

   a neutron scintillator material including 6-Li having a non-zero concentration; and
   a binder material having an index of refraction that is substantially identical to an index of refraction of the neutron scintillator material.

2. The material of Claim 1, wherein the neutron scintillator material incorporates a scintillation activator.

3. The material of Claim 2, wherein the scintillation activator comprises one of cerium ions and praseodymium ions.

4. The material of Claim 3, wherein the cerium ions and the praseodymium ions comprise cerium halides and praseodymium halides, respectively.

5. The material of any of Claims 1 to 4, wherein the neutron scintillator material comprises one the following compositions:

   [1] $(Li_{1-x}A_x)_2LnX_5$, where $0 < x \leq 1$, or
   [2] $(Li_{1-x}A_x)_2(Li_{1-y}A'_y)LnX_6$, where $0 < x \leq 1$ and $0 < y \leq 1$ but x and y cannot simultaneously be one, or
   [3] $BLn(Li_{1-x}A_x)X_5$, where $0 < x \leq 1$,

and where,

A, A' = ions of Tl, Na, K, Rb, Cs, or any combination thereof,

B = ions of Cs, Rb, Tl, or any combination thereof

$Ln$ = ions of Y, the lanthanide series, bismuth, or any combination thereof, and X = ions of halogen elements or any combination thereof.

6. The material of any of Claims 1 to 4, wherein the neutron scintillator material comprises one the following compositions:

[1] $(Li_{1-x}A_x)_2 Ln_{1-a-b}Ce_a Pr_b X_5$, where $0 < x \leq 1$; $0 \leq a \leq 1$ and $0 \leq b \leq 1$ but a and b cannot simultaneously be zero or one, or

[2] $(Li_{1-x}A_x)_2(Li_{1-y}A'_y) Ln_{1-a-b}Ce_a Pr_b X_6$, where $0 < x \leq 1$ and $0 < y \leq 1$ but x and y cannot simultaneously be one; $0 \leq a \leq 1$ and $0 \leq b \leq 1$ but a *and* b cannot simultaneously be zero or one, or

*[3] BLn*$_{1-a-b}$Ce$_a$Pr$_b$(Li$_{1-x}$A$_x$)$X_5$, where $0 < x \leq 1$; $0 \leq a \leq 1$ and $0 \leq b \leq 1$ but *a* and *b* cannot simultaneously be zero or one,

and where,

A, A' = ions of T1, Na, K, Rb, Cs, or any combination thereof,

B = ions of Cs, Rb, Tl, or any combination thereof,

$Ln$ = ions of Y, the lanthanide series, bismuth, or any combination thereof, and X = a halogen ion, or any combination comprising halogen ions.

7. The material of any of Claims 1 to 6, wherein the binder material comprises one or more of a thermoplastic resin or a thermoset resin.

8. The material of any of Claims 1 to 7, wherein the binder material is selected from the group consisting of acrylate-based resin, epoxy resin, siloxane resin, and combinations thereof.

9. The material of any of Claims 1 to 8, wherein the binder material provides the neutron scintillator material with sufficient flowability to be formed into a shaped article.

10. A radiation detector (10, 20, 30, 40) comprising the neutron scintillator composite material of any of Claims 1 to 9 optically coupled to a photosensor (14).

FIG. 1

FIG. 2

EP 2 461 186 A2

FIG. 3

FIG. 4

EP 2 461 186 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080131347 A1, Srivastava

- US 6585913 B, Lyons